## Europäisches Patentamt

## European Patent Office

## Office européen des brevets

(11) Veröffentlichungsnummer: **0 181 477**
**B1**

(12) # EUROPÄISCHE PATENTSCHRIFT

(45) Veröffentlichungstag der Patentschrift:
18.05.88

(51) Int. Cl.⁴: **F 16 C 1/22**

(21) Anmeldenummer: 85112444.6

(22) Anmeldetag: 02.10.85

(54) Vorrichtung zum Betätigen eines aus Seilhülle und Zugseil bestehenden Seilzuges.

(30) Priorität: 09.10.84 DE 3437060

(43) Veröffentlichungstag der Anmeldung:
21.05.86 Patentblatt 86/21

(45) Bekanntmachung des Hinweises auf die Patenterteilung:
18.05.88 Patentblatt 88/20

(84) Benannte Vertragsstaaten:
DE FR GB IT

(56) Entgegenhaltungen:
DE-A-2 449 434
GB-A-1 165 429
US-A-4 068 750
US-A-4 181 209

(73) Patentinhaber: BAYERISCHE MOTOREN WERKE
Aktiengesellschaft, Postfach 40 02 40 Petuelring
130 - AJ- 36, D-8000 München 40 (DE)

(72) Erfinder: Seidl, Josef, Dipl.- Ing., Tristanstrasse 18,
D-8034 Germering (DE)

## Beschreibung

Die Erfindung bezieht sich auf eine Vorrichtung zum Betätigen eines aus Seilhülle und Zugseil bestehenden Seilzuges nach dem Oberbegriff des Anspruches.

Solche Vorrichtungen werden unter anderem zur Betätigung der Reibungskupplungen von Motorrädern verwendet. Durch den Abrieb der Kupplungsscheibe muß das Spiel der Kupplung von Zeit zu Zeit neu eingestellt werden. Das geschieht in der Regel während eines Werkstattaufenthalts, da die Einstellarbeiten nur von einem Fachmann zuverlässig vorgenommen werden können. Das Spiel wird dabei immer etwas größer als notwendig gewählt, damit nach dem zu erwartenden Verschleiß des Kupplungsbelages noch bis zur nächsten Einstellung genügend Spiel vorhanden ist. Diese Maßnahme und die Erhöhung des Spiels bei erhitzter Kupplung verringern aber den nutzbaren Betätigungsweg, was wiederum durch das dadurch bedingte verschlechterte Übersetzungsverhältnis eine erhöhte Betätigungskraft bedingt. Die Dosierung muß auf kürzerem Wege erfolgen mit dem weiteren Nachteil, daß die Dosierbarkeit sich verschlechtert.

Aus der DE-A-2 449 434 ist ein selbstnachstellende Kupplungsbstätigungseinrichtung für Kraftfahrzeuge bekannt. Hier ist ein Fußpedal an einem karosseriefesten Lagerbock schwenkbar angelenkt. Um die gleiche Lagerachse läßt sich auch ein in dem oberen Abschnitt des Pedals angeordnetes Zahnsegment verschwenken. An seinem der Fußauflagefläche entgegengesetzten Ende weist das Pedal schwenkbar eine Klaue auf, die in die Zähne des als Koppelelement dienenden Zahnsegments eingreift. Das Koppelelement selbst nimmt das Zugseil des Seilzuges auf.

Bei einem Niederdrücken des Pedals greift die Klaue in das Koppelelement ein und verriegelt es mit dem Pedal. Beim Loslassen des Pedals wird dieses zusammen mit dem Koppelelement über eine an der Kupplung vorgesehenen Rückstellfeder in die Ausgangsstellung zurückgezogen. Sollte sich inzwischen der Kupplungsbelag abgenutzt haben, erlaubt die Klaue am Fußpedal ein Verschwenken des Kuppelelements gegenüber dem Pedal um den Betrag des Verschleißes. Durch das Zahnsegment ist eine gestufte Nachstellung gegeben.

Eine derartige gestufte Nachstellung zeigt auch die US-A-4 181 209 in einem ersten Ausführungsbeispiel. Auch hier ist wieder ein Fußpedal an seinem oberen Ende mit Klauen versehen, die in ähnlicher Weise in einem Zahnsegment eingreifen. In einem zweiten Ausführungsbeispiel sind die Klauen durch Klemmkörper ersetzt. Bei einem Niederdrücken des Pedals verriegeln die Klemmkörper das Koppelelement mit dem Pedal zu einer Einheit.

Beim Loslassen des Pedals schwenkt das Koppelelement zunächst mit dem Pedal zurück, allerdings geben die Gelenkkörper schließlich das Koppelelement frei, so daß ein evtl. aufgetretener Kupplungsbelagverschleiß ausgeglichen werden kann.

Aufgabe der Erfindung ist es, eine gattungsgemäße Vorrichtung so weiterzuentwickeln, daß sich wie beim Stand der Technik ein nachträgliches Einstellen erübrigt. Dabei soll sich das einmal eingestellte Spiel nicht mehr merklich ändern. Darüber hinaus wird ein kompakter und damit klein bauender Aufbau angestrebt, so daß sich die Einrichtung auch für andere Betätigungsarten als nur für die Fußpedalbetätigung eignet.

Die Aufgabe wird erfindungsgemäß gelöst mit den Merkmalen des Anspruchs.

Nach dem Erfindungsgedanken ist die Verbindung zwischen dem Betätigungselement und dem Zugseil wie bei den bekannten Vorrichtungen unterbrochen. Nur im Betätigungsfall sind diese beiden Teile durch einen Klemmkörper miteinander verbunden. Dadurch kann sich das Zugseil und damit das Koppelelement im unbetätigten Zustand frei gegenüber dem Betätigungshebel bewegen. Das Koppelelement kann sich somit infolge des Beschlagverschleisses allmählich gegenüber dem Betätigungshebel verstellen. Trotzdem ist sichergestellt, daß im Betätigungsfall der Klemmkörper eine sichere Verbindung herstellt. Die Verstellbewegung des Koppelelements ist nicht auf eine Richtung beschränkt. Es kann auch in die andere Richtung ausweichen, wenn sich bei einer erhitzten Kupplung das Spiel vergrößert.

Insgesamt läßt sich sagen, daß durch die erfindungsgemäße Vorrichtung keine Wartung mehr nötig ist, das Kupplungsspiel konstant bleibt und der Betätigungsweg optimal ausgenutzt werden kann. Dadurch ergeben sich die weiteren Vorteile, die in geringeren Betätigungskräften und guter Dosierbarkeit liegen.

Vorstehend wurde die erfindungsgemäße Vorrichtung vornehmlich im Zusammenhang bei einer Reibungkupplung betrachtet. Die Erfindung ist jedoch hierauf nicht beschränkt, sie läßt sich auch für eine Fahrzeugbremse verwenden.

Nachfolgend wird ein vorteilhaftes Ausführungsbeispiel der Erfindung anhand der dazugehörigen Zeichnung näher beschrieben.

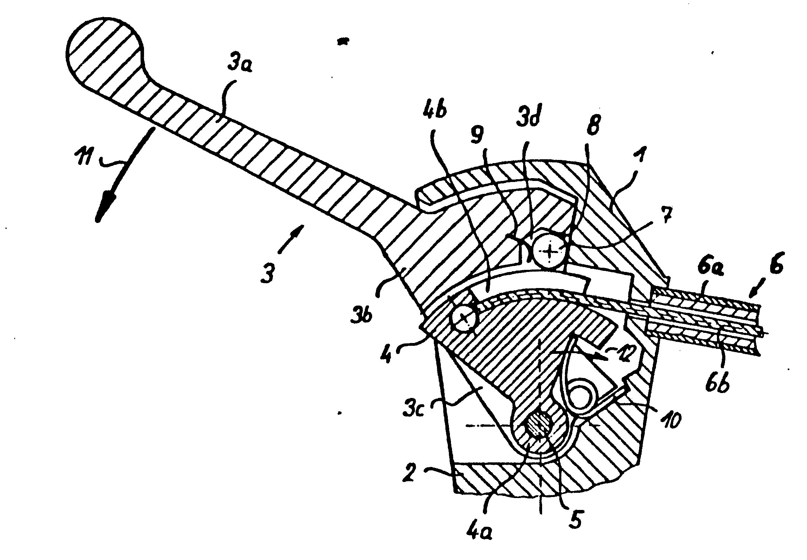

In der Zeichnung ist in einer einzigen Figur die Kupplungshebelarmatur eines Motorrads dargestellt. Das Motorrad selbst ist nicht gezeichnet, jedoch sei der Vollständigkeit halber darauf hingewiesen, daß die Armatur an der Lenkstange oder an einem daran befestigten Verkleidungteil angebracht ist.

Die Kupplungshebelarmatur besteht aus einem Gehäuse 1, das an seinem unteren Abschnitt einen Lagerbock 2 aufweist. Am Lagerbock 2 sind ein Betätigungshebel 3 und ein Koppelelement 4 schwenkbar gelagert. Diese beiden Teile weisen die gleiche Schwenkachse auf, lassen sich jedoch gegeneinander frei verdrehen. Die Schwenkachse selbst ist in der Zeichnung durch einen Lagerbolzen 5 symbolisch dargestellt. Der Betätigungshebel 3 setzt sich aus einem Griffteil 3a und einem im Gehäuse 1 angeordneten Aufnahmeteil 3b zusammen. Der Aufnahmeteil 3b ist in seinem unteren Ende zu einem in der Zeichnung nicht erkennbaren Gelenkauge für den Lagerbolzen 5 ausgebildet. Von diesem Gelenkauge ausgehend, weist das Aufnahmeteil 3b eine sich nach oben erstreckende Ausnehmung 3c auf, die in eine Tasche 3d übergeht. In dieser Ausnehmung 3c befindet sich das Koppelelement 4, das an seinem unteren Abschnitt ebenfalls ein Gelenkauge 4a ausbildet und ansonsten im wesentlichen die Form eines Scheibensegmentes aufweist. Es ist ohne weiteres ersichtlich, daß das Aufnahmeteil 3b statt der Ausnehmung 3c auch zwei sich nach unten erstreckende Schenkel aufweisen könnte, zwischen denen dann das Koppelelement 4 angeordnet wäre. Durch die Schraffierung des Betätigungshebels in der Zeichnung ist diese Möglichkeit angedeutet.

Die vorbeschriebene Ausbildung ergibt einen kompakten und somit klein bauenden Aufbau der erfindungsgemäßen Vorrichtung.

Am Gehäuse 1 ist die Seilhülle 6a eines insgesamt im 6 bezeichneten Seilzuges befestigt. Innerhalb der Seilhülle 6a verläuft ein Zugseil 6b; es handelt sich hier um einen bekannten Bowden-Zug. Das Zugseil 6b erstreckt sich in das Gehäuse 1 hinein, wird von einer am Scheibenrand des Koppelelements 4 eingearbeiteten, Führungsnut 4b aufgenommen und ist schließlich mit einem Querglied in einem Befestigungauge des Koppelelements 4 eingehängt.

Die Tasche 3d des Betätigungshebels 3 nimmt eine Stahlkugel 7 auf, die als Klemmkörper zwischen dem Koppelelement 4 und dem Betätigungshebel 3 dient. Die Stahlkugel 7, sie könnte auch als Rolle ausgelegt sein, liegt auf dem Scheibenrand des Koppelelements 4 auf. In ihrem Durchmesser ist sie so ausgelegt, daß zwischen ihr und einem oberen Rand der Tasche 3d en kleiner Abstand 8 freibleibt. Die Tasche 3d öffnet sich zu dem Gehäuse 1 hin und eine Rückstellfeder 9 drückt die Stahlkugel 7 gegen das Gehäuse 1.

Zwischen dem Gehäuse 1 und dem Koppelelement 4 liegt eine Druckfeder 10, die in Betätigungsrichtung des Zugseiles 6 wirkt. Die Betätigungsrichtung ergibt sich, wenn der Griffteil 3a in Richtung des Pfeiles 11 nach unten gedrückt wird. Die Druckfeder 10 wirkt der Federkraft entgegen, die auf dem Zugseil 3b entweder durch die nicht dargestellte Kupplungsfeder oder durch eine im Bereich des Kupplungsgehäuses angeordnete Rückstellfeder lastet.

Im eingekuppelten Zustand kann sich das Koppelelement 4 und das damit befestigte Zugseil 6b frei gegenüber dem Betätigungshebel 3 bewegen, soweit dies das Gleichgewicht der auf den Zugseil 6b lastenden Federkräfte zuläßt. Die Stahlkugel 7 rollt sich aufgrund des Abstandes 8 auf den Scheibenrand nahezu ungehindert ab. Sie beeinflußt die Beweglichkeit des Koppelelementes 4 im großen und ganzen nicht. Durch den sich im Laufe der Zeit einstellenden Kupplungsverschleiß wird sich das Koppelelement allmählich in Richtung des Pfeiles 12 verstellen. Erhitzt sich die Kupplung sehr stark, erfolgt die Verstellung in die entgegengesetzte Richtung.

In einem Betätigungsfall, also wenn die Kupplung gelöst werden soll, drückt der Fahrer den Betätigungshebel 3 in Richtung des Pfeiles 11 nach unten. Dabei legt sich die obere Wand der Tasche 3d an die Stahlkugel 7 an und drückt sie auf den Scheibenrand des Koppelelements 4. Damit sind der Betätigungshebel 3 und das Koppelelement 4 miteinander verriegelt und bei einem weiteren Drücken des Betätigungshebels 3 nimmt dieser das Koppelelement 4 mit. Läßt der Fahrer den Betätigungshebel 3 wieder los, schwenken infolge der Kraft der Kupplungsfeder sowohl der Betätigungshebel 3 als auch das noch mit ihm verriegelte Koppelelement 4 in die Ausgangslage zurück. Dabei stößt die Stahlkugel 7 an die Gehäusewand und wird in die gelöste Stellung gedrängt.

**Patentanspruch**

Vorrichtung zum Betätigen eines aus Seilhülle (6a) und Zugseil (6b) bestehenden Seilzuges (6), insbesondere zum Lösen einer Kraftfahrzeug-Reibungskupplung, mit einem Lagerbock (2), an dem über ein Drehgelenk (5) ein Betätigungshebel (3) und ein das Zugseil (6b) aufnehmendes Koppelelement (4) schwenkbar gelagert sind und bei der das Koppelelement (4) durch eine in Zugrichtung des Seilzuges (6b) wirkende Druckfeder (10) beaufschlagt ist und im Betätigungsfall ein zwischen Koppelelement (4) und Betätigungshebel (3) vorgesehener Klemmkörper einen Kraftschluß zwischen den beiden Teilen (3, 4) herstellt, dadurch gekennzeichnet, daß die Vorrichtung als eine an einer Lenkstange eines Motorrades befestigbare Hebelarmatur ausgelegt ist, daß das Koppelelement (4) die Form eines Scheibensegments aufweist und in einer daran angepaßten Ausnehmung (3c) des Betätigungshebels (3) angeordnet ist und daß die Ausnehmung (3c) in eine Tasche (3d) für die Aufnahme einer als Klemmkörper dienenden Stahlkugel (7) übergeht und daß die Stahlkugel (7) mit dem Scheibenrand des Koppelelements (4) zusammenwirkt.

## Claim

A device for the actuation of a cable line (6) comprising a cable sheath (6a) and a traction cable (6b), especially for the release of a friction clutch of a motor vehicle, the device having a bearing block (2) on which an actuating lever (3) and a coupling element (4) holding the traction cable (6b) are pivotally mounted <u>via</u> a swivel joint (5), and in which the coupling element (4) is acted upon by a compression spring (10) acting in the drawing direction of the cable line (6b) and, in the case of being actuated, a clamping member provided between the coupling element (4) and the actuating lever (3) produces a force-locking connection between the two parts (3, 4), characterised in that the device is designed as a lever fitting which is capable of being attached to the steering handle-bars of a motorcycle, that the coupling element (4) has the shape of a segment of a disc and is arranged in a corresponding recess (3c) of the actuating lever (3), and that the recess (3c) leads into a pocket (3d) to receive a steel ball (7) serving as a clamping member and that the steel ball (7) co-operates with the disc edge of the coupling element (4).

## Revendication

Dispositif d'actionnement d'un mécanisme de commande à câble (6) se composant d'une gaine de câble (6a) et d'un câble de traction (6b) en particulier pour le relâchement de l'embrayage à friction d'un véhicule à moteur, comportant un plateau de palier (2) sur lequel sont supportés de façon à pouvoir pivoter une articulation pivotante (5), un levier d'actionnement (3) et une pièce d'accouplement (4) recevant le câble de traction (6b) et dans lequel la pièce d'accouplement (4) est appliquée par un ressort de pression agissant dans le sens de la traction du câble de traction (6b), et dans le cas du fonctionnement produit entre le corps d'accouplement (4) et le levier d'actionnement (3) de la pièce de serrage une adhérence entre les deux parties (3, 4), caractérisé en ce que le dispositif est conçu comme une garniture de levier pouvant être fixée sur le guidon d'une motocyclette, en ce que la pièce d'accouplement (4) présente la forme de secteurs circulaires et est placée dans une cavité (3c) correspondante du levier d'actionnement (3) et en ce que la cavité (3c) se transforme en un logement (3d) destiné à la réception d'une bille d'acier (7) servant de corps d'arrêt, et en ce que la bille d'acier (7) coopère avec le rebord circulaire de la pièce d'accouplement (4).